# EUROPÄISCHE PATENTSCHRIFT

(11) **EP 1 658 209 B1**
(45) Veröffentlichungstag und Bekanntmachung des Hinweises auf die Patenterteilung: **27.02.2008**
(21) Anmeldenummer: 04766206.9
(22) Anmeldetag: 13.07.2004
(51) Int. Cl.: B60S 1/52, B05B 1/04

(54) **ZUR BEFESTIGUNG IN EINEM KRAFTFAHRZEUG VORGESEHENE EINRICHTUNG ZUR REINIGUNG EINER SCHEIBE ODER EINER STREUSCHEIBE**
DEVICE THAT IS USED FOR CLEANING A WINDOW OR A HEADLAMP LENS AND IS TO BE FIXED IN A MOTOR VEHICLE
DISPOSITIF A FIXER DANS UN VEHICULE AUTOMOBILE ET DESTINE AU NETTOYAGE D'UNE VITRE OU D'UN VERRE DIFFUSANT

(30) Priorität: 27.08.2003 DE 10339505
(43) Veröffentlichungstag der Anmeldung: 24.05.2006
(73) Patentinhaber: SIEMENS AKTIENGESELLSCHAFT, 80333 München (DE)
(72) Erfinder: BACHMANN, Marcus, 37284 Waldkappel (DE); REHS, Andreas, 36199 Rotenburg (DE)
(86) Internationale Anmeldenummer: PCT/EP2004/051475
(87) Internationale Veröffentlichungsnummer: WO 2005/021341

(56) Entgegenhaltungen:
- WO-A-02/060589
- FR-A- 1 515 616
- FR-A- 2 803 542
- US-A- 4 184 636

## Beschreibung

Die Erfindung betrifft eine zur Befestigung in einem Kraftfahrzeug vorgesehene Einrichtung zur Reinigung einer Scheibe oder einer Streuscheibe, mit einer von einem Düsenstock gehaltenen Waschdüse und mit Mitteln zur Verstellung des Neigungswinkels der Waschdüse, wobei die Mittel zur Verstellung des Neigungswinkels der Waschdüse gegenüber dem Düsenstock gestaltet sind.

Eine solche Einrichtung ist beispielsweise aus der DE 196 52 083 A1 bekannt. Hierbei ist die Waschdüse fest in dem Düsenstock montiert. Der Düsenstock wird in einer Ausnehmung eines Karosserieblechs gehalten und ist mittels eines Federelementes gegen einen verstellbaren Anschlag vorgespannt. In einem von dem verstellbaren Anschlag entfernten Bereich hat der Düsenstock eine Lagerung. Beim Verstellen des Anschlags lässt sich der gesamte Düsenstock verschwenken und damit der Neigungswinkel der Waschdüse einstellen. Hierdurch lässt sich ein Waschflüssigkeitsstrahl der Waschdüse nach der Montage in einem Kraftfahrzeug einstellen und damit Toleranzen der zu reinigenden Scheibe gegenüber angrenzenden Karosserieteilen ausgleichen. Weiterhin lässt sich der Waschflüssigkeitsstrahl beispielsweise nach einem Unfall des Kraftfahrzeuges erneut einstellen.

Nachteilig bei der bekannten Einrichtung ist, dass der Düsenstock sehr große Abmessungen aufweist und eine große Ausnehmung in einem Karosserieblech des Kraftfahrzeuges erfordert, bzw. unter der Motorhaube montiert werden muss. Weiter besitzt die Einrichtung mit dem Steckanschluss zur Flüssigkeitsleitung und der Waschdüse zwei Dichtstellen, die eine spezielle Bearbeitung erfordern, um die Dichtheit zu gewährleisten.

Aus der WO 02/060589 A1 ist eine solche Einrichtung bekannt geworden, bei der der Düsenstock eine aus zwei Bauteilen zusammengesetzte Waschdüse aufnimmt. Ein Teil der Waschdüse ist wannenförmig gestaltet, während das andere Teil in die Wanne eingesetzt ist. Die Düsenstruktur wird von den angrenzenden Bereichen der Teile erzeugt. Diese Einrichtung ermöglicht jedoch eine fehlerhafte Montage und ist zudem aufwändig aufgebaut. Diese Einrichtung ist zudem auf wenige Düsengeometrien beschränkt.

Aus der Fr 2 803 542 A ist zudem eine Einrichtung bekannt geworden, bei der die Waschdüse quer in einem Zylinder angeordnet ist. Der Zylinder wird in dem Düsenstock befestigt. Auch diese Einrichtung ist auf wenige Düsengeometrien beschränkt und erfordert eine kostenintensive Fertigung der Waschdüse.

Weiterhin ist aus der FR 1 515 616 A eine solche Einrichtung bekannt, bei der die Waschdüse als quer zu einem Zylinder angeordnete Bohrung ausgebildet ist. Auch diese Gestaltung ist auf wenige Düsengeometrien beschränkt. Eine komplizierte Düsengeometrie erfordert einen sehr hohen Aufwand.

Aus der US 4,184,636 A ist eine Einrichtung mit einer kastenförmigen Waschdüse bekannt geworden. Dieser Aufbau der Waschdüse erfordert eine große Anzahl von Bauteilen, welche zudem kostenintensiv zu fertigen sind.

Der Erfindung liegt das Problem zugrunde, eine Einrichtung der eingangs genannten Art so weiterzubilden, dass sie besonders kostengünstig aufgebaut ist.

Dieses Problem wird erfindungsgemäß dadurch gelöst, dass die Waschdüse in einem in dem Düsenstock angeordneten Einsatz befestigt ist und dass der Einsatz drehbar gehalten ist oder dass sich die Bohrung stromabwärts kontinuierlich oder stufenartig verjüngt und dass der Einsatz entlang seiner Längsachse in zwei Halbzylinder oder Halbkegel geteilt ist und dass die Halbzylinder oder Halbkegel von der Bildung eines Zylinders oder Kegels mit ihren Schnittflächen aufeinander liegen und dass die Halbzylinder oder Halbkegel an einer Kante ihrer Schnittflächen einteilig miteinander verbunden sind, so dass sie durch Zusammenklappen einen Zylinder oder Kegel bilden.

Durch diese Gestaltung lässt sich der Einsatz mit der Waschdüse besonders einfach in dem Düsenstock montieren. Dabei kann in einer ersten Ausführungsform die vollständige Waschdüse in dem Einsatz mittels einer Rast- oder Steckverbindung befestigt werden. Hierdurch ist die Waschdüse besonders kostengünstig aufgebaut. In einer zweiten Ausführungsform kann auf die Verbindung der Waschdüse mit dem Einsatz verzichtet werden, da der Einsatz und die Waschdüse eine einteilige Einheit bilden.

In der einfachsten Gestaltung ist die Ausnehmung eine senkrecht zur Längsachse des Einsatzes verlaufende Bohrung, die als Kanal wirkend den Waschflüssigkeitsstrahl erzeugt. Die Bohrung ist mit geringem Aufwand nachträglich herstellbar. In einer vorteilhaften Weiterbildung der Erfindung wird die Bohrung während der Herstellung des Einsatzes, z. B. durch entsprechende Gestaltung des Spritzgießwerkzeuges, erzeugt.

Bei der Verwendung von Ausnehmungen mit komplizierten Strukturen hat sich die Ausbildung des zylinder- oder kegelförmigen Einsatzes in zwei Teilen als vorteilhaft erwiesen. Hierbei ist der Einsatz entlang seiner Längsachse in zwei Halbzylinder oder Halbkegel geteilt, wobei die Halbzylinder oder Halbkegel unter Bildung eines Zylinders oder Kegels mit ihren Schnittflächen aufeinander liegen. Die Ausnehmung ist in vorteilhafter Weise im Bereich mindestens einer Schnittfläche eines Halbzylinders oder Halbkegels angeordnet. An beiden Halbzylindern oder Halbkegeln angeordnete Formelemente, z. B. Stifte, Bohrungen, dienen durch Ineinandergreifen zur Lagesicherung der Halbzylinder oder Halbkegel.

Die Waschdüse könnte beispielsweise aus dem Düsenstock herausragen. Witterungseinflüsse z. B. Fahrtwind lassen sich jedoch gemäß einer anderen vorteilhaften Weiterbildung der Erfindung einfach von der Waschdüse fernhalten, wenn der Düsenstock im Bereich der Waschdüse eine im Vergleich zu einem Durchmesser eines von der Waschdüse zu erzeugenden Waschflüssigkeitsstrahls große Öffnung aufweist.

Ein Einfluss des Neigungswinkels auf die Sprühleistung der Waschdüse lässt sich gemäß einer anderen vorteilhaften Weiterbildung der Erfindung einfach vermeiden, wenn der Düsenstock eine in Strömungsrichtung gesehen unmittelbar vor dem Einsatz oder der Waschdüse angeordnete, zur Verbindung einer Waschmittelzufuhr mit der Waschdüse über deren gesamten Verdrehbereich gestaltete Kammer hat.

Zur Vereinfachung der Montage trägt es gemäß einer anderen vorteilhaften Weiterbildung der Erfindung bei, wenn der Düsenstock pilzförmig gestaltet ist und an der Unterseite seines Hutbereichs zur Verbindung mit einem Karosserieblech vorgesehene Rastmittel aufweist. Weiterhin ermöglicht diese Gestaltung eine einfache Abdichtung der Ausnehmung im Karosserieblech für die Waschdüse.

Die Waschdüse kann in vorteilhafter Ausführung sowohl eine Punktstrahldüse als auch eine Fluidicdüse sein, die im Einsatz angeordnet ist.

Die Verbindung der Waschdüse mit dem Einsatz ist vorzugsweise als Rast- und Steckverbindung ausgebildet.

Der Einsatz einer Düse wird vermieden, wenn sich die Bohrung im Einsatz stromabwärts verjüngt. Die Verjüngung der Bohrung kann dabei kontinuierlich als auch stufenartig ausgebildet sein.

Eine erleichterte Montage der Halbzylinder oder Halbkegel ist gegeben, wenn sie an einer Kante ihrer Schnittflächen einteilig und damit unverlierbar miteinander verbunden sind. Die Verbindung lässt sich in einfacher Weise mit einem Filmscharnier erzielen, das während der Herstellung der Halbzylinder und Halbkegel erzeugt wird.

Das für die Herstellung der Ausnehmung erforderliche Werkzeug lässt sich einfacher gestalten, wenn die den Waschflüssigkeitsstrahl erzeugende Ausnehmung im Bereich einer Schnittfläche eines Halbzylinders oder Halbkegels angeordnet ist und die Schnittfläche des zweiten Halbzylinders oder Halbkegels als Dichtfläche ausgebildet ist. Dies ist insbesondere dann von Vorteil, wenn die Ausnehmung eine einen oszillierenden Waschflüssigkeitsstrahl erzeugende Fluidic-Struktur ist.

Der Neigungswinkel der Waschdüse lässt sich besonders einfach beispielsweise bei der Erzeugung des Waschflüssigkeitsstrahls einstellen, wenn der Einsatz oder die Waschdüse zylindrisch oder kegelig gestaltet ist und von außerhalb des Düsenstocks zugängliche Mittel zum Ansetzen eines Drehwerkzeugs hat. Im einfachsten Fall kann das Mittel zum Ansetzen eines Drehwerkzeuges ein seitlich an dem Einsatz angeordneter Schlitz für einen Schraubendreher sein.

Die Erfindung lässt zahlreiche Ausführungsformen zu. Zur weiteren Verdeutlichung ihres Grundprinzips sind mehrere davon in der Zeichnung dargestellt und nachfolgend beschrieben. Diese zeigen in
- Fig. 1: eine erfindungsgemäße Einrichtung mit einem in einer Ausnehmung eines Karosserieblechs befestigten Düsenstock,
- Fig. 2: eine stark vergrößerte Schnittdarstellung der erfindungsgemäßen Einrichtung aus Fig. 1.
- Fig. 3a,b: je einen Einsatz der Einrichtung nach Fig. 1,
- Fig. 4: einen aus zwei Halbzylindern gebildeten Einsatz nach Fig. 1.

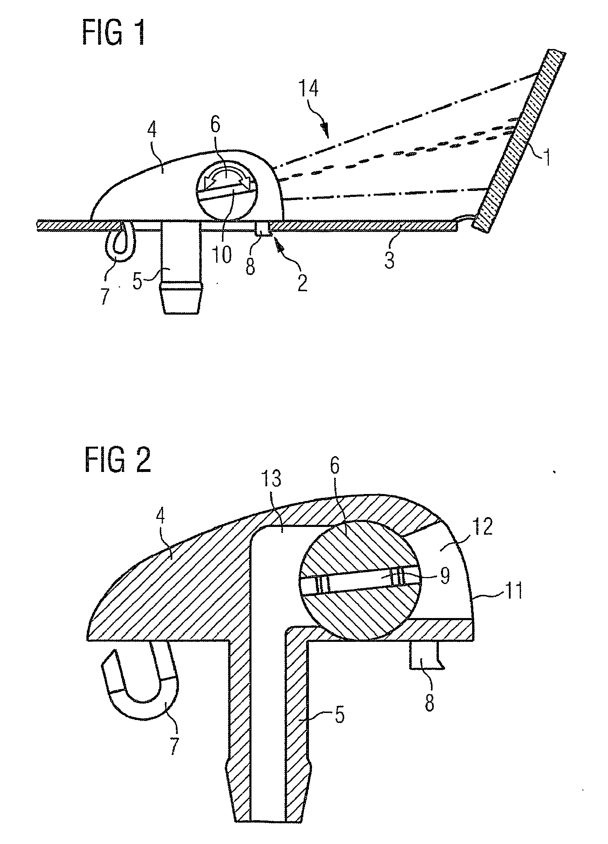

Figur 1 zeigt eine Einrichtung zur Reinigung einer Scheibe 1 eines Kraftfahrzeuges mit einem in einer Ausnehmung 2 eines Karosserieblechs 3 angeordneten Düsenstock 4. Die Scheibe 1 kann auch eine Streuscheibe eines Scheinwerfers eines Kraftfahrzeugs sein. Der Düsenstock 4 ist pilzförmig gestaltet und hat als Schaft einen Anschlussstutzen 5 zum Anschluss einer nicht dargestellten Waschflüssigkeitsleitung. In dem Hutbereich ist ein Einsatz 6 so angeordnet, dass dessen Längsachse quer zur Fahrzeuglängsachse ausgerichtet ist. Die Unterseite des Hutbereichs weist als Rasthaken ausgebildete Rastmittel 7, 8 auf und haltert den Düsenstock 4 unverschiebbar an dem Karosserieblech 3. Der Einsatz 6 dient zur Halterung einer in Figur 2 dargestellten Waschdüse 9. Der Einsatz 6 ist in dem Düsenstock 4 um eine horizontale Achse drehbar und axial unverschiebbar gelagert und hat einen zum Ansetzen eines Schraubendrehers vorgesehenen Schlitz 10. Beim Verdrehen des Einsatzes 6 lässt sich ein Neigungswinkel eines von der in Figur 2 dargestellten Waschdüse 9 erzeugten Waschflüssigkeitsstrahls 14 verstellen. Die Grenzen des Verstellbereichs des Waschflüssigkeitsstrahls 14 sind in der Zeichnung strichpunktiert dargestellt.

Figur 2 zeigt die Einrichtung aus Figur 1 in einem stark vergrößerten Längsschnitt. Hierbei ist zu erkennen, dass die Waschdüse 9 als Fluidic-Düse ausgebildet und im Vergleich zu dem Einsatz 6 sehr klein gestaltet ist. Der Waschflüssigkeitsstrahl 14 solcher Fluidic-Düsen ist sehr scharf und oszilliert in einer Ebene. Der Düsenstock 4 weist im Austrittbereich der Waschdüse 9 eine große Öffnung 11 auf. Die Öffnung 11 ermöglicht einen großen Verstellbereich des Neigungswinkels des von der Waschdüse 9 erzeugten Waschflüssigkeitsstrahls 14 und begrenzt eine die Waschdüse 9 vor Witterungseinflüssen und Fahrtwind schützende Umrandung 12. In Strömungsrichtung gesehen vor der Waschdüse 9 ist in dem Düsenstock 4 eine Kammer 13 angeordnet. Die Kammer 13 stellt eine ausreichende Zufuhr von Waschflüssigkeit zu der Waschdüse 9 bei jedem Neigungswinkel sicher.

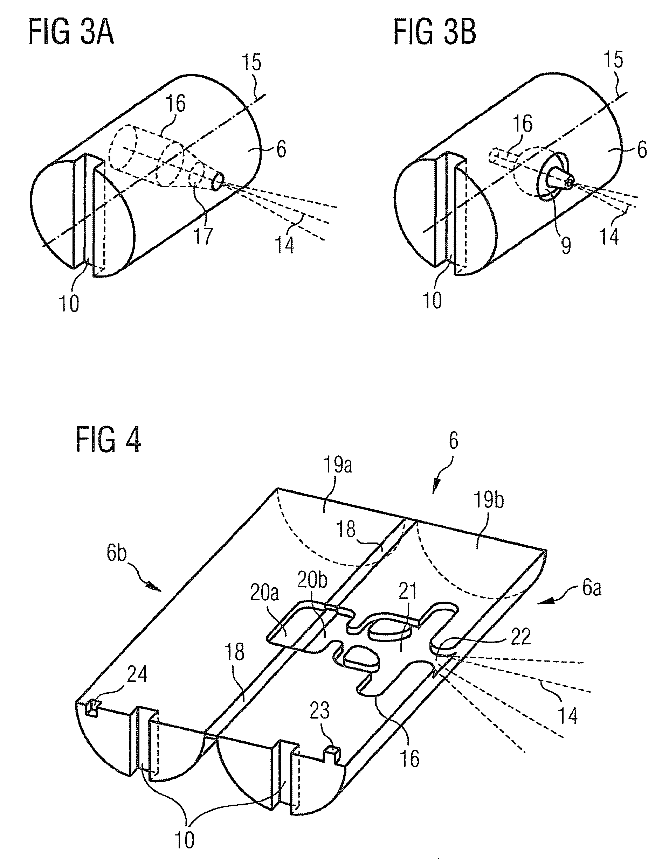

Figur 3a zeigt den Einsatz 6 aus Fig. 1 in einer perspektivischen Darstellung. Der zylindrische Einsatz 6 besitzt an einer Seite einen Schlitz 10 zum Verdrehen, um so den Neigungswinkel des Waschflüssigkeitsstrahls 14 einzustellen. Senkrecht zur Längsachse 15 des Einsatzes 6 ist eine Ausnehmung 16 angeordnet. Die Ausnehmung 16 ist eine Bohrung, die sich stromabwärts in Richtung der nicht dargestellten zu reinigenden Scheibe verjüngt. Die Verjüngung der Bohrung 16 erfolgt stufenartig in einem Bereich 17. Die Bohrung wirkt als Düse zur Erzeugung des Waschflüssigkeitsstrahls 14

Der Einsatz 6 in Fig. 3b unterscheidet sich zu dem Einsatz in Figur 3 zum einen in seiner kegelförmigen Außenkontur, zum anderen weist der Einsatz 6 eine Ausnehmung 16 auf, in die eine als Punktstrahldüse ausgebildete Waschdüse 9 eingeklipst ist.

Der in Fig. 4 dargestellte Einsatz 6 besteht aus zwei Halbzylindern 6a, 6b, die über ein Filmscharnier 18 einteilig miteinander verbunden sind. Durch Zusammenklappen der beiden Halbzylinder 6a, 6b liegen diese mit ihren Schnittflächen 19a, 19b aufeinander, sodass sie den Einsatz 6 bilden. Die Halbzylinder 6a, 6b besitzen je eine Öffnung 20a, 20b, die mit der Kammer 13 in Verbindung steht, um den Durchfluss der Waschflüssigkeit zu ermöglichen. In der Schnittfläche 19b des Halbzylinders 6b ist im Anschluss an die Öffnung 20b die Ausnehmung 16 als Fluidic-Struktur 21 ausgebildet. Die Fluidic-Struktur 21 bewirkt, dass aus der über die Öffnungen 20a, 20b einströmende Waschflüssigkeit ein oszillierender Waschflüssigkeitsstrahl 14 erzeugt wird, der über die Austrittsöffnung 22 den Einsatz 6 in Richtung der nicht dargestellten Scheibe verlässt. Die Schnittfläche 19a des Halbzylinders 6a bildet dabei die Dichtfläche zum Abdichten der Fluidic-Struktur 21. Zur Lagesicherung der Halbzylinder 6a, 6b im gefügten Zustand besitzt der Halbzylinder 6b einen Vorsprung 23, der in eine Nut 24 des Halbzylinders 6a eingreift.

## Patentansprüche

1. Zur Befestigung in einem Kraftfahrzeug vorgesehene Einrichtung zur Reinigung einer Scheibe oder Streuscheibe, mit einer von einem Düsenstock gehaltenen Waschdüse und mit Mitteln zur Verstellung des Neigungswinkels der Waschdüse, wobei die Mittel zur Verstellung des Neigungswinkels der Waschdüse (9) gegenüber dem Düsenstock (4) gestaltet sind, und die Waschdüse (9) in einem in dem Düsenstock (4) angeordneten Einsatz (6) befestigt ist und der Einsatz (6) drehbar gehalten ist oder ein Einsatz (6) als Waschdüse (9) ausgebildet ist, wobei jede dieser Ausbildungen des Einsatzes (6) eine den Waschflüssigkeitsstrahl (14) erzeugende Ausnehmung (16) besitzt und dass der Einsatz (6) entlang seiner Längsachse (15) in zwei Halbzylinder (6a, 6b) oder Halbkegel geteilt ist und dass die Halbzylinder (6a, 6) oder Halbkegel von der Bildung eines Zylinders oder Kegels mit ihren Schnittflächen (19a, 19b) aufeinander liegen und dass die Halbzylinder (6a, 6b) oder Halbkegel an einer Kante ihrer Schnittflächen (19a, 19b) einteilig miteinander verbunden sind, so dass sie durch Zusammenklappen einen Zylinder oder Kegel bilden.

2. Einrichtung nach Anspruch 1, **dadurch gekennzeichnet, dass** der Düsenstock (4) im Bereich der Waschdüse (9) eine im Vergleich zu einem Durchmesser eines von der Waschdüse (9) zu erzeugenden Waschflüssigkeitsstrahls große Öffnung (11) aufweist.

3. Einrichtung nach zumindest einem der vorhergehenden Ansprüche, **dadurch gekennzeichnet, dass** der Düsenstock (4) eine in Strömungsrichtung gesehen unmittelbar vor dem Einsatz (6) oder der Waschdüse (9) angeordnete, zur Verbindung einer Waschmittelzufuhr mit der Waschdüse (9) über deren gesamten Schwenkbereich gestaltete Kammer (13) hat.

4. Einrichtung nach zumindest einem der vorhergehenden Ansprüche, **dadurch gekennzeichnet, dass** der Düsenstock (4) pilzförmig gestaltet ist und an der Unterseite seines Hutbereichs zur Verbindung mit einem Karosserieblech (3) vorgesehene Rastmittel (7, 8) aufweist.

5. Einrichtung nach zumindest einem der vorhergehenden Ansprüche, **dadurch gekennzeichnet, dass** der Einsatz (6) oder die Waschdüse (9) zylindrisch oder kegelig gestaltet ist und von außerhalb des Düsenstocks (4) zugängliche Mittel zum Ansetzen eines Drehwerkzeugs hat.

6. Einrichtung nach Anspruch 1, **dadurch gekennzeichnet, dass** die den Waschflüssigkeitsstrahl (14) erzeugende Ausnehmung (16) eine Bohrung ist.

7. Einrichtung nach Anspruch 6, **dadurch gekennzeichnet, dass** sich die Bohrung (16) stromabwärts kontinuierlich oder stufenartig verjüngt.

8. Einrichtung nach Anspruch 1, **dadurch gekennzeichnet, dass** die Verbindung des Halbzylinders (6a, 6b) oder Halbkegels ein Filmscharnier (18) hat.

9. Einrichtung nach Anspruch 1, **dadurch gekennzeichnet, dass** die den Waschflüssigkeitsstrahl (14) erzeugende Ausnehmung (16) im Bereich mindestens einer Schnittfläche (19a, 19b) des Halbzylinders (6a, 6b) oder Halbkegels angeordnet ist.

10. Einrichtung nach Anspruch 1, **dadurch gekennzeichnet, dass** die den Waschflüssigkeitsstrahl (14) erzeugende Ausnehmung (16) im Bereich der Schnittfläche (19b) des Halbzylinders (6b) oder Halbkegels angeordnet ist und dass die Schnittflächen (19a) des zweiten Halbzylinders (6a) oder Halbkegels als Dichtfläche (19a) ausgebildet ist.

11. Einrichtung nach Anspruch 1, **dadurch gekennzeichnet, dass** die Ausnehmung (16) eine einen oszillierenden Waschflüssigkeitsstrahl (14) erzeugende Fluidic-Struktur (21) ist.

12. Einrichtung nach Anspruch 1 oder 8, **dadurch gekennzeichnet, dass** an den Halbzylindern (6a, 6b) oder Halbkegeln Formelemente (23, 24), vorzugsweise Stifte, Vorsprünge, Nuten, Bohrungen, angeordnet sind.

## Claims

1. Device which is provided for fixing in a motor vehicle and is intended for cleaning a window or headlamp lens, having a washing nozzle retained by a nozzle holder, and having means for adjusting the angle of inclination of the washing nozzle, it being the case that the means for adjusting the angle of inclination of the washing nozzle (9) are formed in relation to the nozzle holder (4), and the washing nozzle (9) is fixed in an insert (6) arranged in the nozzle holder (4), and the insert (6) is retained in a rotatable manner, or an insert (6) is designed as a washing nozzle (9), each of these embodiments of the insert (6) having a cutout (16) which generates the washing-fluid jet (14), and that the insert (6) is divided, along its longitudinal axis (15), into two half-cylinders (6a, 6b) or half-cones, and that the half-cylinders (6a, 6b) or half-cones lie one upon the other by way of their section planes (19a, 19b) from the formation of a cylinder or cone, and that the half-cylinders (6a, 6b) or half-cones are connected integrally to one another at one edge of their section planes (19a, 19b), with the result that they can be swung together to form a cylinder or cone.

2. Device according to Claim 1, **characterized in that** the nozzle holder (4) in the region of the washing nozzle (9), has a large opening (11) in comparison with a diameter of a washing-fluid jet which can be generated by the washing nozzle (9).

3. Device according to at least one of the preceding claims, **characterized in that** the nozzle holder (4) has a chamber (13) which is arranged immediately upstream of the insert (6) or the washing nozzle (9), as seen in the direction of flow, and, in order to connect a washing-agent supply to the washing nozzle (9), is formed over the entire pivoting range thereof.

4. Device according to at least one of the preceding claims, **characterized in that** the nozzle holder (4) is in mushroom form and, on the underside of its head region, has latching means (7, 8) which are provided for connecting it to a bodywork panel (3).

5. Device according to at least one of the preceding claims, **characterized in that** the insert (6) or the washing nozzle (9) is formed cylindrically or conically and has means which are accessible from outside the nozzle holder (4) and are intended for the attachment of a turning tool.

6. Device according to Claim 1, **characterized in that** the cutout (16) which generates the washing-fluid jet (14) is a bore.

7. Device according to Claim 6, **characterized in that** the bore (16) tapers continuously or in a step-like manner downstream.

8. Device according to Claim 1, **characterized in that** the connection of the half-cylinder (6a, 6b) or half-cone has a film hinge (18).

9. Device according to Claim 1, **characterized in that** the cutout (16) which generates the washing-fluid jet (14) is arranged in the region of at least one section plane (19a, 19b) of the half-cylinder (6a, 6b) or half-cone.

10. Device according to Claim 1, **characterized in that** the cutout (16) which generates the washing-fluid jet (14) is arranged in the region of the section plane (19b) of the half-cylinder (6b) or half-cone, and **in that** the section planes (19a) of the second half-cylinder (6a) or half-cone is designed as a sealing surface (19a).

11. Device according to Claim 1, **characterized in that** the cutout (16) is a fluidic structure (21) which generates an oscillating washing-fluid jet (14).

12. Device according to Claim 1 or 8, **characterized in that** shaped elements (23, 24), preferably spikes, protrusions, grooves, bores, are arranged on the half-cylinders (6a, 6b) or half-cones.

## Revendications

1. Dispositif prévu pour être monté dans un véhicule automobile et destiné au nettoyage d'une vitre ou d'un verre diffusant, 1 comportant un gicleur de lavage maintenu par un porte-gicleur et des moyens permettant de régler l'angle d'inclinaison du gicleur de lavage, où les moyens sont conçus pour permettre de régler l'angle d'inclinaison du gicleur de lavage (9) par rapport au porte-gicleur et où le gicleur de lavage (9) est fixé dans un insert (6) monté dans le porte-gicleur (4) et où l'insert (6) est fixé en rotation ou bien où un insert (6) est conçu comme gicleur de lavage (9), où chacune de ces configurations de l'insert comportent un évidement (16) produisant le jet de liquide de lavage (14) et où l'insert (6) est partagé, le long de son axe longitudinal (15), en deux demi-cylindres (6a, 6b) ou demi-sphères et où les demi-cylindres (6a, 6b) ou demi-sphères sont appliques (ou appliquées) l'un (ou l'une) sur l'autre par leurs surfaces de tranche (19a, 19b) en formant un cylindre ou un cône et où les demi-cylindres (6a, 6b) ou demi-sphères sont liés (ou liées) l'un (ou l'une) à l'autre par une arête de leurs surfaces de tranche (19a, 19b), formant ainsi une seule pièce, si bien qu'ils (ou qu'elles) forment, si on les replie l'un (ou l'une) sur l'autre, un cylindre ou un cône.

2. Dispositif selon la revendication 1, **caractérisé par le fait que** le porte-gicleur (4) a, dans la zone du gicleur de lavage (9), une ouverture (11) qui est grande par comparaison avec un diamètre d'un jet de liquide de lavage à produire par le gicleur de lavage (9).

3. Dispositif selon au moins l'une des revendications précédentes, **caractérisé par le fait que** le porte-gicleur (4) a un compartiment (13) disposé, vu dans la direction d'écoulement du fluide, directement avant l'insert (6) ou avant le gicleur de lavage (9) et conçu pour établir la liaison entre une alimentation en produit de lavage et le gicleur de lavage (9) sur l'ensemble de sa plage de pivotement.

4. Dispositif selon au moins l'une des revendications précédentes, **caractérisé par le fait que** le porte-gicleur (4) a la forme d'un champignon et comporte, sur la face inférieure de son chapeau, des moyens d'arrêt (7, 8) prévus pour assurer le lien avec une tôle de la carrosserie (3).

5. Dispositif selon au moins l'une des revendications précédentes, **caractérisé par le fait que** l'insert (6) ou le gicleur de lavage (9) sont cylindriques ou coniques et ont des moyens accessibles à partir de l'extérieur du porte-gicleur (4) permettant d'y appliquer un outil.

6. Dispositif selon la revendication 1, **caractérisé par le fait que** l'évidement (16) produisant le jet de liquide de lavage (14) est un alésage.

7. Dispositif selon la revendication 6, **caractérisé par le fait que** l'alésage (16) devient plus petit d'une façon continue ou d'une façon étagée dans le sens d'écoulement.

8. Dispositif selon la revendication 1, **caractérisé par le fait que** la liaison du demi-cylindre (6a, 6b) ou du demi-cône comporte une charnière en membrane (18).

9. Dispositif selon la revendication 1, **caractérisé par le fait que** l'évidement (16) produisant le jet de liquide de lavage (14) est disposé dans la zone d'au moins une surface de tranche (19a, 19b) du demi-cylindre (6a, 6b) ou demi-cône.

10. Dispositif selon la revendication 1, **caractérisé par le fait que** l'évidement (16) produisant le jet de liquide de lavage (14) est disposé dans la zone de la surface de tranche (19b) du demi-cylindre (6b) ou demi-cône et que les surfaces de tranche (19a) du deuxième demi-cylindre (6a) ou demi-cône sont conçues comme surfaces d'étanchéité (19a).

11. Dispositif selon la revendication 1, **caractérisé par le fait que** l'évidement (16) est une structure fluidic (21) produisant un jet de liquide de lavage (14) oscillant.

12. Dispositif selon la revendication 1 ou 8, **caractérisé par le fait que** des éléments usinés (23, 24), d'une façon préférentielle, des chevilles, des avancées, des rainures, des alésages, sont placés sur les demi-cylindres (6a, 6b) ou demi-cônes.
